# EUROPEAN PATENT SPECIFICATION

(11) **EP 1 728 834 B1**
(45) Date of publication and mention of the grant of the patent: **20.03.2013**
(21) Application number: 06114601.5
(22) Date of filing: 26.05.2006
(51) Int. Cl.: C09D 7/00, C09D 201/00, B05D 1/38

(54) **Varnish and production method thereof**
Lack und Verfahren zu dessen Herstellung
Vernis et son procédé de fabrication

(30) Priority: 26.05.2005 TR 200501983
(43) Date of publication of application: 06.12.2006
(73) Proprietor: Durmus Yasar ve Ogullari Boya Vernik ve Recine Fabrikalari Anonim Sirketi, Izmir (TR)
(72) Inventor: Celiker, Gulsen, Sirketi 10003 sok.No:2 Cigli 35620 Izmir (TR); Yucel, Dilek DYO Boya Fabrikalari Sanayi, Cigli 35620 Izmir (TR); Berber, Atila DYO Boya Fabrikalari Sanayi ve, 35620 Izmir (TR); Sidar, Selim DYO Boya Fabrikalari Sanayi ve, 35620 Izmir (TR)
(74) Representative: Dericioglu, Ekin

(56) References cited:
- WO-A-2005/040294
- DATABASE WPI Week 200471 Derwent Publications Ltd., London, GB; AN 2004-719391 XP002400784 & CN 1 487 035 A (ZHUHAI DONGCHENG CHEM CO LTD) 7 April 2004 (2004-04-07)

## Description

### Technical Field

The invention relates to transparent varnish used in industries such as parquet, wooden furniture, paper, plastic and the like and not including any volatile organic material and the production method thereof.

### Prior Art

It is well-known in the art that varnish with ultraviolet curing and resins like polyester, epoxy and urethane acrylate are manufactured together with photo-initiator by using acrylic esters.

CN1487035 discloses an ultraviolet curing insulating paint composition. The said paint is obtained by mixing methyl acrylic acid prepolymer modified about 30-80% by weight and reactive acrylate monomer about 10-50% by weight and with 2-6% photo-initiator and heating at about 50-60°C, and during mixing by adding auxiliary materials 0.5-3% by weight and further adding solvent about 0-20% by weight, and later cooling and filtering the last mixture.

US5846310 is one of the embodiments known in the art and discloses a coating to be used for agents like pigment paint, ink, plastics and solar filter. The said coating is obtained by coating nonporous SiO₂ spheres with nano-sized TiO₂, ZrO₂ or Fe₂O₃ particles or a mixture thereof and then coating silanes as well.

W003072663 discloses a use of an organic sol of cerium for improving the resistance of paint and particularly varnish.

W02005040294 discloses an organosilane-based composition for producing a barrier layer for gases which comprises at least one organoalkoxysilane whose organofunctionality displays at least one unsaturated hydrocarbon group, at least one aminoalkylalkoxysilane, at least one polyol, optionally, another alkoxysilane or alkoxysiloxane, and optionally, at least one nano- or microscale sernimetal oxide or metal oxide, sernimetal oxide hydroxide or metal oxide hydroxide, or sernimetal hydroxide or metal hydroxide. If the composition is intended to be cured by UV radiation, it advantageously comprises a photoinitiator, its amount preferably being from 1 to 4% by weight, based on the total weight of the composition.

However the products obtained according to abovementioned embodiments do not have the required chemical resistance and resistance to abrasion, scratches and shocks. When their resistance to abrasion is improved as a result of many costly applications it is found out that their brittleness increases and adhesion problems occur. Consequently, the coating materials of said products need to be replaced before their time and this leads to financial lost.

### Brief Description of the Invention

The object of this invention is to realize transparent varnish with UV curing, used in industries such as parquet, wooden furniture, paper, plastic and the like and having a high chemical resistance and resistance to scratches, abrasion and shocks and the production method thereof.

Another object of this invention is to realize varnish with a good-adherence and the production method thereof.

Another object of this invention is to realize varnish with a glass performance and the production method thereof.

A further object of this invention is to realize varnish which prevents material loss by weight and the production method thereof.

### Detailed Description of the Invention

Various characteristics of the varnish obtained upon applying the invention is shown in the enclosed drawings, in which;
Figure 1 is the view of a panel coated with varnish of the prior art under microscope before the abrasion test.
Figure 2 is the view of a panel coated with varnish of the prior art under microscope after the abrasion test.
Figure 3 is the view of a panel coated with the inventive varnish under microscope before the abrasion test.
Figure 4 is the view of a panel coated with the inventive varnish under microscope after the abrasion test.
Figure 5 is the view of a panel coated with varnish of the prior art under microscope after drawing deep scratches on it.
Figure 6 is the view of a panel coated with the inventive varnish under microscope after drawing deep scratches on it.

The method realized in order to achieve the objects of this invention mainly comprises the following steps:
- using an UV-curable polymer or oligomer resin without any volatile organic material within the reaction tank,
- adding acid catalyst for making the reaction medium acidic,
- adding nano-sized metal oxide particles to the mixture at the metal oxides to resin ratio of 20-100% by weight,
- adding silanes to the system at silanes to the metal oxides ratio of 20-50% by weight,
- removing the alcohol and water formed during the hydrolysis reaction of silanes within one reaction tank at 50-80°C,
- leaving the gel formed for the completion of the reaction,
- thinning the gel with a reactive thinner such as di, tri or tetra acrylic ester after the completion of the reaction,
- curing the final product in UV oven by adding photo-initiator.

The inventive UV curing varnish is manufactured in a process comprising a reactor including a strong mixer, with a heating jacket and a vacuum device, and a condenser and a separator, three of which are known in the art.

In the reaction, unsaturated polyester, polyether acrylate, epoxy acrylate, urethane acrylate or a mixture thereof is used and placed in the reactor.

The reaction medium is acidic and by adding acid catalysts the medium pH is adjusted as 0-4, preferably 2-2,5. The acid catalysts used are selected among one of the polycarboxylic acid group or anhydride group. The ratio of acid catalysts in the varnish is about 0.01-1.0% by weight.

In the next step, one of the metal oxides such as nano-sized aluminum oxide, silica, zirconium oxide etc. or a mixture thereof in certain amounts is added into the system. The ratio of metal oxides to resin is about 20-100% by weight, and the size of nano-particles can be between 5-100 nm.

After this step silanes are added to the mixture in a balanced way in about 1 hour from the supplementary tank. Silanes can be added to the system alone or together with certain solvents in other preferred embodiment of the invention. The silanes used can be selected among silanes carrying hydrolyzed group, methyl triethoxy silane, methyl methoxy silane, tetra methyl ortho silicate, tetraethyl silicate, 3-glycidyloxypropyl trimethoxy silane etc. or non-hydrolyzed silanes, silanes carrying vinyl, metacryloyl, phenyl, fluorine, amino, mercapto etc. group or a mixture thereof in certain proportions. And the solvents used are selected among hydrophilic solvents, alcohols and glycols or a mixture thereof in certain proportions. Hydrolyzing of silanes takes place in resin, and surfaces of metal oxides are modified with the structure formed. The ratio of silanes to the metal oxides is about 20-50% by weight. Alcohol and water formed during the reaction should be removed with the help of separator by using heat and/or vacuum.

In a preferred embodiment of the invention, metal oxides modified can then be dispersed in resin.

The gel-like structure formed is left for minimum 24 hours for the completion of the reaction and the product should be thinned with di, tri or tetra acrylic ester such that the solid material therein formed after the said 24 hours is about 20-40% by weight. The final product is cured in UV oven by adding photo-initiator known in the art.

All the reaction process takes place in one reaction tank of 50-80 °C.

In another preferred embodiment of the invention basic catalysts can be used and the reaction takes place in a basic medium.

In another preferred embodiment of the invention UV curing resin and acrylic esters can be put in the tank from the beginning and then nano-sized metal oxides of which surfaces are modified by silanes can be added thereon.

### Industrial Applicability of the Invention

The UV curing nano-composite varnish obtained as a result of the inventive varnish production method has a higher resistance to abrasion, scratch and shock when compared to varnishes in the prior art. The said varnish has a high chemical resistance and performs well in very thin films, and is elastic, more economical and more easily applicable than the conventional systems. And also it has a glass performance and a low material loss by weight. Its loss in gloss is "0" after the abrasion tests. Examples, tests and the results for the final product is as follows:

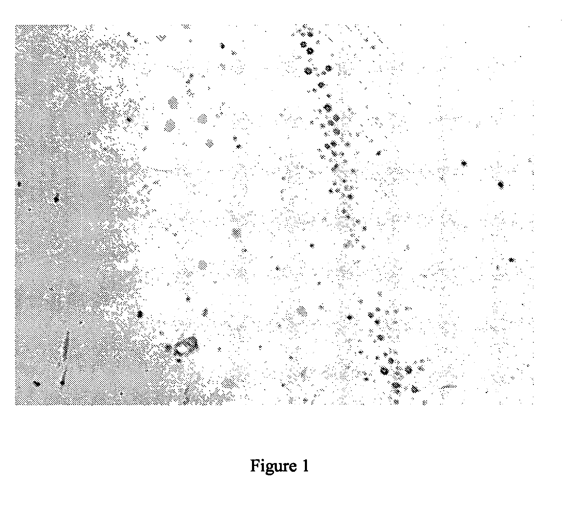

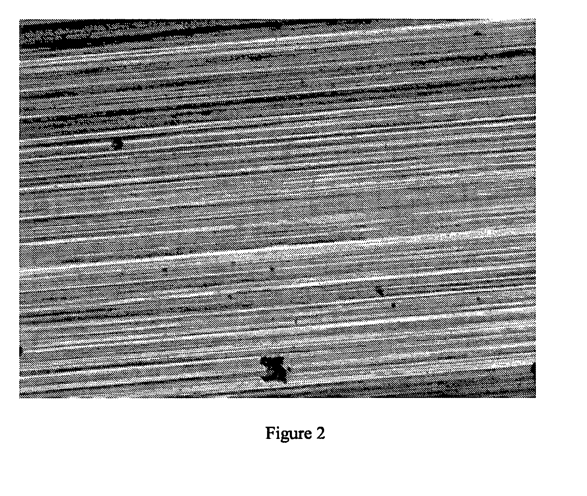

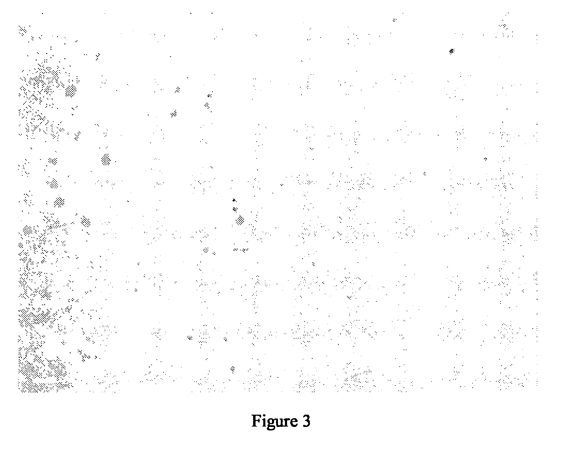

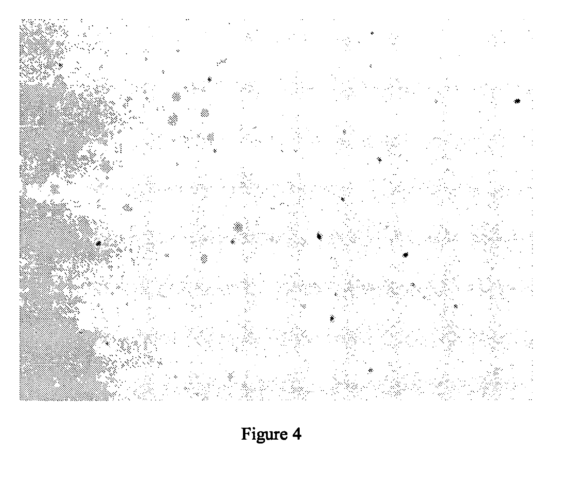

### Test 1: Abrasion Test (Figures 1-2-3-4)

The test is a 50-cycle abrasion process with a Scotch-Brite^{®} sticked onto a 800 g hammer. A surface coated with varnish in the prior art and a surface coated with the inventive varnish are subject to abrasion test and in the end of the process the loss in gloss are measured with Glossmeter. In the end the loss in gloss on the surface with the inventive varnish after 50-cycles is 0%.

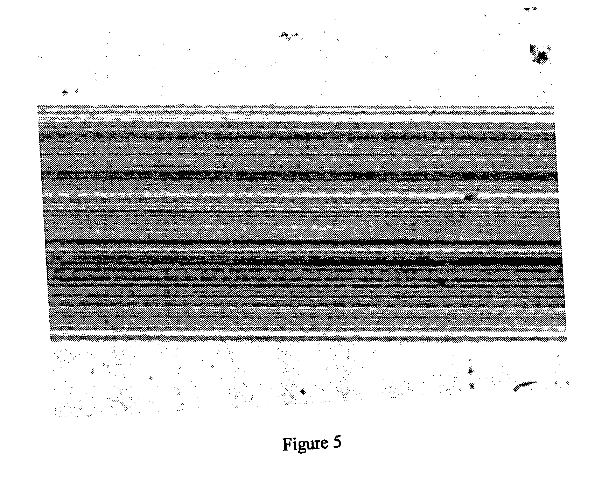

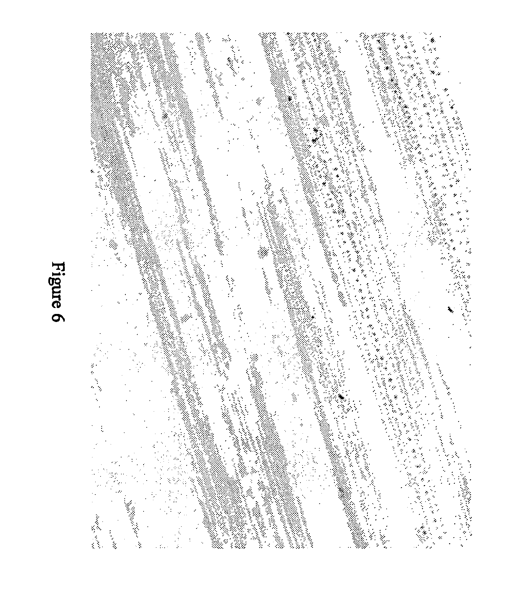

### Test 2: Deep scratching (Figures 5-6)

A surface coated with varnish in the prior art and a surface coated with the inventive varnish are scratched with a screwdriver 5 cm long and the areas are examined under a microscope. As seen in the results deformation on the surface with the inventive varnish is much less than the other surface.

Within the framework of this basic concept, various embodiments can be developed for the inventive paint and production method thereof, and it is not intended that this invention be limited to the examples given above, and the invention is as stated in the enclosed claims.

## Claims

1. A method for producing transparent varnish with UV curing, used in parquet, wooden furniture, paper, plastic industries and having a high chemical resistance and resistance to scratches, abrasion and shocks and a glass performance and good-adherence and preventing material loss by weight; which method comprises the following steps:
- using an UV-curable polymer or oligomer resin without any volatile organic material within a reaction tank,
- adding acid catalyst for making the reaction medium acidic
- adding nano-sized metal oxide particles to the mixture at the metal oxides to resin ratio of 20-100% by weight,
- adding silanes to the system at silanes to the metal oxides ratio of 20-50% by weight,
- removing the alcohol and water formed during the hydrolysis reaction of silanes within one reaction tank at 50-80 °C,
- leaving the gel formed for the completion of the reaction,
- thinning the gel with a reactive thinner such as di, tri or tetra acrylic ester after the completion of the reaction,
- curing the final product in UV oven by adding photo-initiator.

2. A method according to claim 1, **characterized in that** resin used is selected among unsaturated polyester, polyether acrylate, epoxy acrylate, urethane acrylate or a mixture thereof.

3. A method according to claim 1 or 2, **characterized in that** the medium pH is 0-4, preferably 2-2,25 by adding acid catalysts into the reaction.

4. A method according to claim 3, **characterized in that** the acid catalysts used are selected among one of the polycarboxylic acid group or anhydride group.

5. A method according to claim 4, **characterized in that** the ratio of acid catalysts in the varnish is 0.01-1.0% by weight.

6. A method according to any of the preceding claims, **characterized in that** nano-sized metal oxides added to the system are one of the metal oxides namely aluminum oxide, silica, zirconium oxide or a mixture thereof.

7. A method according to claim 6, **characterized in that** the size of nano-particles is between 5-100 nm.

8. A method according to any of the preceding claims, **characterized in that** silanes are added to the mixture in a balanced way in 1 hour from the supplementary tank.

9. A method according to claim 8, **characterized in that** silanes are added to the system alone or together with certain solvents.

10. A method according to claim 9, **characterized in that** the silanes used are selected among silanes carrying hydrolyzed group, methyl triethoxy silane, methyl methoxy silane, tetra methyl ortho silicate, tetraethyl silicate, 3-glycidyloxypropyl trimethoxy silane or non-hydrolyzed silanes, silanes carrying vinyl, metacryloyl, phenyl, fluorine, amino, mercapto group or a mixture thereof.

11. A method according to claim 10 **characterized in that** the said solvents are selected among hydrophilic solvents, alcohols and glycols or a combination thereof.

12. A method according to claim 11, **characterized in that** hydrolyzing of silanes takes place in resin, and surfaces of metal oxides are modified with the structure formed.

13. A method according to claim 12, **characterized in that** alcohol and water formed during the reaction are removed with the help of separator by using heat and/or vacuum.

14. A method according to any of the preceding claims, **characterized in that** the gel-like structure formed is left for minimum 24 hours for the completion of the reaction.

15. Varnish achieved according to the method in any of the preceding claims.

## Patentansprüche

1. Ein Verfahren zur Herstellung vom transparenten Lack mit UV-Härten, der in Parketten-, Holz-, Möbel, Papier-, Kunststoffindustrie uä verwendet wird und einen hohen chemischen Widerstand aufweist und gegen Kratzen, Abreibung und Schläge widerstandsfähig ist sowie eine Glass-Performanz und gute Hafteigenschaften besitzt und Materialabtragung per Gewichtsanteil verhindert, wobei der Verfahren die folgenden Schritte umfaßt:
- Verwendung von einem UV-härtbaren Polimer- bzw. Oligomerharz ohne irgendeinen flüchtigen organischen Material innerhalb des Reaktionsbehälters,
- Hinzufügen von Säurehärtern um das Reaktionsmedium säurehaltig zu machen,
- Hinzufügen von nanoskaligen Metalloxid-Teilchen zu der Mischung mit einem Metalloxid-zu-Harz- Anteil von 20-100 gew. %,
- Hinzufügen von Silanen zu dem System mit einem Silanen-zu-Metalloxid-Anteil von 20-50 gew. %,
- Entfernen von Alkohol und Wasser, die während der Hydrolyse-Reaktion von Silanen innerhalb eines Reaktionsbehälters bei 50-80°C ausgebildet sind,
- Zurücklassung von Gel, das für die Fertigstellung der Reaktion ausgebildet ist,
- Verdünnung des Gels nach der Fertigstellung der Reaktion mit einem Verdünner wie di, tri oder tetra Akrylester,
- Aushärten des Endprodukts in UV-Ofen durch Hinzufügung eines Foto-Initiators.

2. Ein Verfahren gemäß Anspruch 1, **gekennzeichnet dadurch, dass** das eingesetzte Harz aus ungesättigtem Polyester, Polyetherakrylat, Epoxyakrylat, Urethanakrylat oder aus einer Mischung davon gewählt wird,

3. Ein Verfahren gemäß Ansprüche 1 oder 2, **gekennzeichnet dadurch, dass** pH des Mediums durch Hinzufügung des Säurehärters zu der Reaktion 0-4, vorzugsweise 2-2, 25 wird,

4. Ein Verfahren gemäß Anspruch 3, **gekennzeichnet dadurch, dass** die eingesetzten Säurehärter aus einer der Polycarbonsäuregruppe oder Anhydridgruppe gewählt sind,

5. Ein Verfahren gemäß Anspruch 4, **gekennzeichnet dadurch, dass** der Anteil von Säurehärtern im Lack ungefähr 0.01- 1.0 % ist,

6. Ein Verfahren gemäß einem der vorangehenden Ansprüche, **gekennzeichnet dadurch, dass** die nanoskaligen Metalloxide, die zu dem System hinzugefügt sind, eines von den Metalloxiden wie Aluminiumoxid, Siliziumoxid, Zirkonoxid etc. oder eine Mischung davon darstellen,

7. Ein Verfahren gemäß Anspruch 7, **gekennzeichnet dadurch, dass** die Größe von Nano-Teilchen im Bereich von 5 - 100 nm liegt,

8. Ein Verfahren gemäß einer der vorangehenden Ansprüche, **gekennzeichnet dadurch, dass** die Silanen aus dem Zusatzbehälter zu der Mischung in ausgewogener Weise ungefähr in 1 Stunde hinzugefügt sind,

9. Ein Verfahren gemäß Anspruch 9, **gekennzeichnet dadurch, dass** die Silane alleine oder zusammen mit bestimmten Lösungsmittel dem System hinzugefügt sind,

10. Ein Verfahren gemäß Anspruch 10, **gekennzeichnet dadurch, dass** die eingesetzten Silanen aus den die hydrolysierten Gruppe tragenden Silanen, Methyl Triethoxy Silan, Tetra Methyl Ortho Silikat, Tetraethil Silikat, 3-Glycydiloxypropil Trimethoxy Silan etc. oder die nicht hydrolysierten Silanen, die Vinyl tragenden Silane, Metakryloyl, Phenyl, Fluor, Amino, Merkaptogruppe tragenden Silanen oder aus einer Mischung davon in bestimmten Anteilen gewählt sind,

11. Ein Verfahren gemäß Anspruch 11, **gekennzeichnet dadurch, dass** die angegebene Lösungsmittel aus den hydrophilen Lösungsmitteln wie Alkohole und Glykole oder eine Kombination davon in bestimmten Anteilen gewählt sind,

12. Ein Verfahren gemäß Anspruch 12, **gekennzeichnet dadurch, dass** die Hydrolysierung von Silanen in Harz stattfindet und die Oberflächen von Metalloxiden durch die gebildete Struktur modifiziert sind,

13. Ein Verfahren gemäß Anspruch 14, **gekennzeichnet dadurch, dass** Alkohol und Wasser, die während der Reaktion ausgebildet sind, werden mit Hilfe eines Abscheiders durch Wärme und /oder Vakuum entfernt.

14. Ein Verfahren gemäß einem der vorangehenden Ansprüche, **gekennzeichnet dadurch, dass** die ausgebildete gelartige Struktur zur Fertigstellung der Reaktion mindestens 24 Stunden gelassen wird.

15. Lack, der gemäß dem Verfahren in einem der vorangehenden Ansprüchen erhalten wird.

## Revendications

1. Méthode de production du vernis transparent résistant à l'éraflure, l'abrasion, et aux chocs avec la résistance chimique, possédant la performance de verre et la caractéristique de bonne adhésivité, empêchant la perte de matériaux, par durcissement ultraviolet pour l'utilisation dans l'industrie de parquet, meuble en bois, papier, et plastique, comportant les étapes suivantes :
- Utilisation de résine polymère ou oligomère durcissable sans aucun matériau organique volatilisable dans le réservoir de réaction,
- Addition d'un catalyseur acide pour l'acidification du milieu de réaction,
- Addition des particules d'oxyde métallique à nano-dimension dans le mélange tel que le ratio oxydes métalliques-résine par rapport au poids est 20-100%,
- Addition des silanes dans le système tel que la proportion des silanes par rapport aux oxydes métalliques est 20-50%,
- Extraction de l'eau et l'alcool formés pendant les réactions d'hydrolyse des silanes à l'intérieur d'un réservoir de réaction au - 50 et 80°C,
- Protection du gel formé pour l'achèvement de la réaction,
- Dilution du gel par un diluant réactif tel que di-, tri, ou tétra ester acrylique suivant l'achèvement de la réaction,
- Durcissement du produit final dans le four ultraviolet par l'addition du photo-actionneur.

2. Méthode selon la revendication 1, **caractérisée par** la sélection de résine utilisée parmi le polyester insaturé, le polyester acrylate, l'époxy acrylate, l'uréthane acrylate, ou leur mélange.

3. Méthode selon les revendications 1 ou 2, **caractérisée par le fait que** le pH du milieu est 0 - 4, et de préférence 2 - 2,25 par l'addition du catalyseur acide à la réaction.

4. Méthode selon la revendication 3, **caractérisé par** la sélection des catalyseurs acides utilisés parmi le groupe d'acide polycarboxylique et l'un des groupes anhydres.

5. Méthode selon la revendication 4, **caractérisée par le fait que** la proportion des catalyseurs acides dans le vernis par rapport au poids est 0,01 - 1,0 %.

6. Méthode selon l'une quelconque des revendications précédentes, **caractérisée par le fait que** les oxydes métalliques à nano-dimension ajoutés dans le système sont par exemple l'oxyde d'aluminium, la silice, l'oxyde de zirconium, ou leur mélange.

7. Méthode selon la revendication 6, **caractérisée par le fait que** les dimensions de nanoparticules est entre 5 et 100 nm.

8. Méthode selon l'une quelconque des revendications précédentes, **caractérisée par** l'addition des silanes du réservoir complémentaire dans le mélange dans une manière équilibrée dans 1 heure.

9. Méthode selon la revendication 8, **caractérisée par** l'addition des silanes tout seule ou ensemble avec certains solvants.

10. Méthode selon la revendication 9, **caractérisée par le fait que** les silanes utilisés sont sélectionnés parmi les silanes comportant le groupe hydrolysé comme triethoxy méthyle silane, methoxy méthyle silane, tetramethyleorthosilicate, tetraethylesilicate, 3-glycidyleoxypropyle trimethoxy silane, ou silanes non hydrolysables, et silanes comportant le groupe de vinyle, methacryloyle, phényle, fluorure, amino, mercapto, ou leurs mélanges.

11. Méthode selon la revendication 10, **caractérisée par** la sélection desdits solvants parmi les alcools et glycols, ou l'un de leur combinaison.

12. Méthode selon la revendication 11, **caractérisée par** la réalisation de l'hydrolyse des silanes dans la résine et la modification des oxydes métalliques avec la structure formée.

13. Méthode selon la revendication 12, **caractérisée par** l'élimination de l'alcool et de l'eau formés pendant la réaction en utilisant la chaleur et/ou le vacuum.

14. Méthode selon l'une quelconque des revendications précédentes, **caractérisée par** l'attente de la structure formée similaire au gel pendant au moins 24 heures pour l'achèvement de la réaction.

15. Vernis obtenu selon la méthode dans l'une quelconque des revendications précédentes.
